# EUROPEAN PATENT APPLICATION

(11) **EP 4 018 892 A1**
(43) Date of publication of application: **29.06.2022**
(21) Application number: 20216260.8
(22) Date of filing: 22.12.2020
(51) Int. Cl.: A47J 37/06, F24C 15/32

(54) **COOKING APPARATUS**

(71) Applicant: Koninklijke Philips N.V., 5656 AG Eindhoven (NL)
(72) Inventor: VAUPOT, Jan, 5656 AE Eindhoven (NL)
(74) Representative: de Vries, Janna

(57) **Abstract**

Provided is a cooking apparatus (10), such as an oven or a steam cooker. The cooking apparatus comprises a food chamber (12) having a base (40), a rear wall area (42), first and second opposing side wall areas, and a front wall area (44). The rear wall area, first and second side wall areas, and front wall area extend around an opening (78) of the food chamber. The opening opposes the base. Food can be placed into and removed from the food chamber via the opening. The cooking apparatus has a cover (13) which is moveable to expose and close the opening. A heating arrangement (18) heats at least part of the cooking apparatus. The cooking apparatus further comprises a circulation system (24) for circulating air in the food chamber. An extraction vent (50) is provided in the rear wall area through which air is drawn by the circulation system from inside the food chamber. A delivery vent (52) is provided at a top region of the rear wall above the extraction vent. The circulation system delivers air to the food chamber through the delivery vent. The delivery vent is arranged to direct the air being delivered to the food chamber towards the front wall area, and the circulation system is configured such that, when the cover is moved to at least partially expose the opening, the air is directed from the delivery vent across the at least partially exposed opening in the direction of the front wall area.

## Description

### FIELD OF THE INVENTION

This invention relates to a cooking apparatus, such as an oven or a steam cooker. A steam cooker is also referred to as a steamer.

### BACKGROUND OF THE INVENTION

Cooking apparatuses, such as ovens and steam cookers, include a cover, such as a door or lid, for closing a food chamber in which the cooking process takes place.

Such cooking apparatuses may include a circulation system, such as a motor and fan arrangement, for circulating air around the food chamber. This may reduce cooking times, and assist to homogenize the environment inside the food chamber during the cooking process.

The user may wish to open the food chamber by moving the cover during the cooking process. This may be, for example, to add further ingredients to the food chamber, or for monitoring the cooking process. Removal of the cover may enable the user to, for instance, insert a thermometer into the food in order to determine its doneness.

However, when the cooking apparatus includes the circulation system, opening of the cover may result in a blast of heat in the direction of the user. This may cause discomfort, and even injury, to the user, as well as undesirable heat loss from the food chamber. The latter risks retarding the cooking process.

### SUMMARY OF THE INVENTION

The invention is defined by the claims.

According to examples in accordance with an aspect of the invention, there is provided a cooking apparatus comprising: a food chamber having a base, a rear wall area, first and second opposing side wall areas and a front wall area, wherein the rear wall area, first and second side wall areas, and front wall area extend around an opening of the food chamber, which opening opposes the base; a cover for closing the food chamber, the cover being moveable to expose the opening; a heating arrangement for heating at least part of the cooking apparatus; a circulation system for circulating air in the food chamber; an extraction vent in the rear wall area through which air is drawn by the circulation system from inside the food chamber; a delivery vent at a top region of the rear wall between the extraction vent and the opening, the circulation system delivering air to the food chamber through the delivery vent, wherein the delivery vent is arranged to direct the air being delivered to the food chamber towards the front wall area, and the circulation system is configured to control a pressure difference between at the delivery vent and at the extraction vent such that, when the cover is moved to at least partially expose the opening, the air is directed from the delivery vent across the at least partially exposed opening in the direction of the front wall area.

The circulation system and delivery vent thus operate to direct air across the at least partially exposed opening, rather than through the opening. This assists to minimize or prevent the user receiving a heat blast, for example towards their face, at the moment of moving the cover to expose the opening. Directing the airflow in this manner may also assist to retain heat and cooking vapours, including odours, within the food chamber, particularly when the cover, e.g. door or lid, is at least partially opened during the cooking process, for example in order to monitor the cooking process.

Directing the delivered airflow across the at least partially exposed opening may be regarded, for instance, as provision of an air curtain thereacross, in the direction of the front wall area. The air curtain provided by the circulation system can assist to retain heat within the food chamber when the cover is at least partially opened during the cooking process, and can assist to minimize or prevent the user receiving a heat blast, for example towards their face, at the moment of moving the cover to expose the opening.

The circulation system may comprise a fan and a motor for rotating the fan.

The pressure difference assisting to direct air from the delivery vent across the at least partially exposed opening can be achieved by, for instance, selecting a rotational speed of the motor which is employed both when the cover closes the opening and when the cover is moved to at least partially expose the opening.

In such an example, the rotational speed can be selected, in other words predetermined, based on geometry- and power-related considerations, as will be explained in more detail herein below.

Alternatively, the rotational speed may be adaptively controlled to maintain directing of the air delivered though the delivery vent across the at least partially exposed opening. For example, a controller may control the rotational speed of the fan based on feedback from one or more sensors.

One or more pressure sensors may, for instance, be arranged to sense the pressure difference, and the controller may be adapted to maintain the pressure difference, e.g. upon the cover being moved to expose the opening, based on the sensory input from the one or more pressure sensors. The one or more pressure sensors may, for example, include a first pressure sensor at the delivery vent, and a second pressure sensor at the extraction vent. In this case, the pressure difference may be determined, e.g. by the controller, from the respective pressures sensed by the first and second pressure sensors.

Alternatively or additionally, the one or more sensors can include a sensor configured to sense movement, or a degree of movement, of the cover to expose the opening, and in this case the controller may be configured to control the rotational speed based on the sensed movement or degree of movement.

The cover may be at least partly transparent in order to facilitate visual monitoring of the cooking process taking place in the food chamber.

The rear wall area may have a first height, and the front wall area may have a second height which is shorter than the first height such that the opening declines from the rear wall area towards the front wall area.

This may assist to compress the air along its flow path and to maintain an airflow across the opening when the cover is removed therefrom. Moreover, when the cover is at least partly transparent, the declining cover can assist the user to observe food in the food chamber without being required to bend over/towards the cover. The slope of the decline may be, for example, in the range of 5° to 20°, such as 10°.

The delivery vent may comprise a slot extending widthwise across the rear wall area. The delivery vent can, for example, extend across at least half of the width of the rear wall area, preferably across more than 60%, 70% or 80% of that width. This may assist to ensure relatively homogeneous distribution of the air delivered into the food chamber. In some examples, the delivery vent extends across up to 100% of the width of the rear wall area.

The base may define the bottom of the food chamber when the cooking apparatus is orientated for use, and the cover may be in the form of a lid arranged to be lifted to expose the opening when the cooking apparatus is orientated for use.

Such a top loader design may facilitate adding ingredients to the food chamber, stirring food in the food chamber, turning over food in the food chamber, cleaning of the food chamber, and so on.

The cooking apparatus may comprise a housing, and a hinge arrangement for pivotally mounting the lid on the housing. The hinge arrangement may, for example, be arranged proximal to the rear wall area such that lifting of the lid initially exposes a portion of the opening proximal to the front wall area. This design can facilitate access to the food chamber, e.g. for observing the cooking process.

When the circulation system comprises a motor, and a fan, the heating arrangement may comprise a heater adjacent the fan. The heater may be spaced apart from an outermost periphery of the fan.

The fan may, for example, have a fan diameter extending between opposing points of the outermost periphery, and the heater may comprise a circular heating element having a heating element diameter which is at least 30% greater than the fan diameter. This assists to minimize excessive blocking of the airflow generated by the fan by the circular heating element enclosing the fan.

Alternatively or additionally, the fan and the heater are contained in a housing portion having a height which is at most 30% greater than the heating element diameter. This assists to ensure adequate directing of the airflow from the delivery vent, so that the delivered air can reach the front wall area.

The cooking apparatus may comprise a water reservoir, and the heating arrangement may be arranged to heat water from the water reservoir to generate steam. The cooking apparatus in this example can be regarded as a steam cooker.

A controller may, for example, be adapted to control the heating arrangement to heat water from the water reservoir to generate steam. Thus, the controller may assist to control the humidity within the food chamber, e.g. using feedback from one or more sensors.

The cooking apparatus may further comprise a water dosing system for delivering water to the heating arrangement. The dosing system may, for example, deliver a constant flow of water during cooking or a regularly pulsed delivery of water, so as not to require feedback control. Alternatively, the dosing system can be controlled dynamically during cooking using feedback from, for instance, a humidity sensor.

The heating arrangement may comprise a further heater having a heated surface, and the cooking apparatus comprises a feed arrangement for bringing water from the water reservoir into contact with the heated surface to generate steam.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figs. 1A and 1B provide schematic cross-sectional views of a prior art oven;
Fig. 2 provides a cross-sectional view of a cooking apparatus according to an example;
Fig. 3 shows a food chamber of the cooking apparatus depicted in FIG. 2 opened up to show a rear wall area and first and second side wall areas;
Fig. 4 shows a food chamber of another exemplary cooking apparatus opened up to show the rear wall area and first and second side wall areas;
Fig. 5 shows a first example of a delivery vent having flow guiding fins and a lower shelf;
Fig. 6 shows a second example of the delivery vent having flow guiding fins between a lower shelf and an upper shelf;
Fig. 7 provides detailed views of a third example of the delivery vent;
Fig. 8 shows a fourth example in which further lower shelves extend along side wall areas from the lower shelf of the delivery vent;
Fig. 9A provides a cross-sectional schematic view of the cooking apparatus depicted in Fig. 2 with arrows showing the circulating airflow while a cover of the cooking apparatus is open;
Fig. 9B provides a cross-sectional schematic view of the cooking apparatus depicted in Fig. 2 with arrows showing the circulating airflow while a cover of the cooking apparatus is closed;
Fig. 10A provides a cross-sectional schematic view of a cooking apparatus whose circulation system delivers insufficient airflow while a cover of the apparatus is closed;
Fig. 10B provides a cross-sectional schematic view of a cooking apparatus according to an example whose circulation system delivers sufficient airflow while a cover of the apparatus is open;
Fig. 10C provides a cross-sectional schematic view of a cooking apparatus whose circulation system delivers insufficient airflow while a cover of the apparatus is open;
Figs. 10D and 10E provide cross-sectional schematic views of a cooking apparatus whose circulation system delivers excessive airflow while a cover of the apparatus is closed;
Fig. 11A provides a cross-sectional schematic view of a cooking apparatus according to another example; and
Fig. 11B provides a plan view of a base of the cooking apparatus shown in Fig. 11A.
Fig. 12 provide a cross-sectional schematic view of a cooking apparatus according to another example.

### DETAILED DESCRIPTION OF EMBODIMENTS

The invention will be described with reference to the Figs.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figs are merely schematic and are not drawn to scale. It should also be understood that the same reference numerals are used throughout the Figs to indicate the same or similar parts.

Provided is a cooking apparatus, such as an oven or a steam cooker. The cooking apparatus comprises a food chamber having a base, a rear wall area, first and second opposing side wall areas, and a front wall area. The rear wall area, first and second side wall areas, and front wall area extend around an opening of the food chamber. The opening opposes the base. Food can be placed into and removed from the food chamber via the opening. The cooking apparatus has a cover which is moveable to expose and close the opening. A heating arrangement heats at least part of the cooking apparatus. The cooking apparatus further comprises a circulation system for circulating air in the food chamber. An extraction vent is provided in the rear wall area through which air is drawn by the circulation system from inside the food chamber. A delivery vent is provided at a top region of the rear wall above the extraction vent. The circulation system delivers air to the food chamber through the delivery vent. The delivery vent is arranged to direct the air being delivered to the food chamber towards the front wall area, and the circulation system is configured such that, when the cover is moved to at least partially expose the opening, the air is directed from the delivery vent across the at least partially exposed opening in the direction of the front wall area.

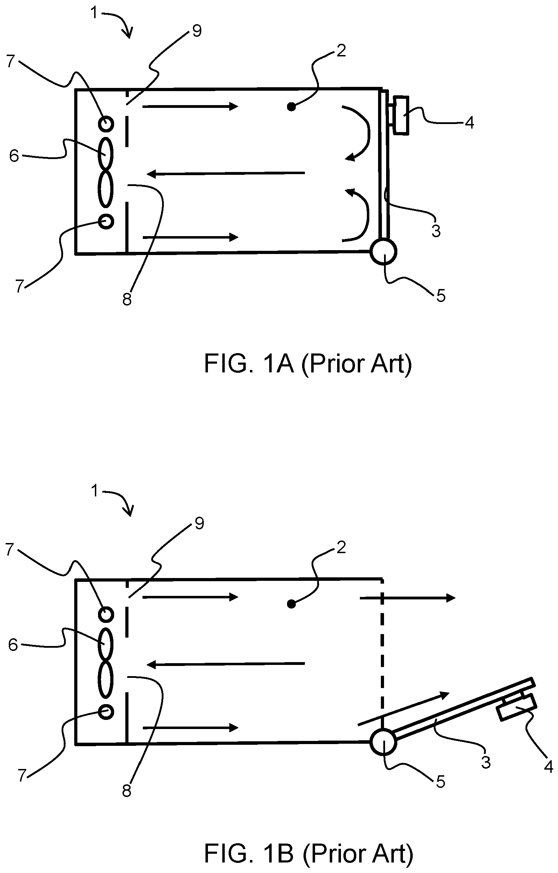

Prior to providing an explanation of the cooking apparatus according to the present disclosure in greater detail, a conventional cooking apparatus 1 will be described with reference to Figs. 1A and 1B.

The cooking apparatus 1 schematically depicted in Figs. 1A and 1B can be regarded as an example of a conventional fan-assisted oven, also known as a convection oven. The oven 1 has a food chamber 2 for receiving food. Food can be placed into and removed from the food chamber 2 by opening the cover 3, which in this case takes the form of a door. To this end, a handle or knob 4 is provided on the door 3 to assist the user in opening the door 3. The door 3 is mounted via a hinge 5 to enable the door 3 to be swung open when the user pulls the handle or knob 4, as shown in Fig. 1B, and swung closed again when the user pushes the handle or knob 4.

The oven 1 comprises a fan 6 and a heating element 7. The fan 6 draws air from the food chamber 2 into an extraction vent 8, and blows the air towards the heating element 7. The thus heated air returns to the food chamber 2 again via the delivery vent 9. Whilst only a single delivery vent 9 is shown in Figs. 1A and 1B, such an oven 1 can often include a plurality of such delivery vents 9, e.g. holes or openings for directing the delivered airflow towards the door 3. The circulation of heated air while the door 3 is closed is schematically depicted in Fig. 1A.

As shown in Fig. 1B, hot air is directed out of the oven 1 when the door 3 is opened. This is referred to herein as a "heat blast". As well as resulting in loss of heat from the food chamber 2, the heat blast risks causing discomfort, or in some cases even injury, to the user when they open the door 3 of the oven 1 during the cooking process.

The circulation system and delivery vent of the cooking apparatus according to the present disclosure operate to direct air across the at least partially exposed opening in the direction of the front wall area. Directing the airflow across, rather than through, the at least partially exposed opening assists to minimize or prevent the user receiving a heat blast, for example towards their face, at the moment of moving the cover to expose the opening.

Directing the airflow in this manner may also assist to retain heat and cooking vapours, including odours, within the food chamber, particularly when the cover, e.g. door or lid, is at least partially opened during the cooking process, for example in order to monitor the cooking process.

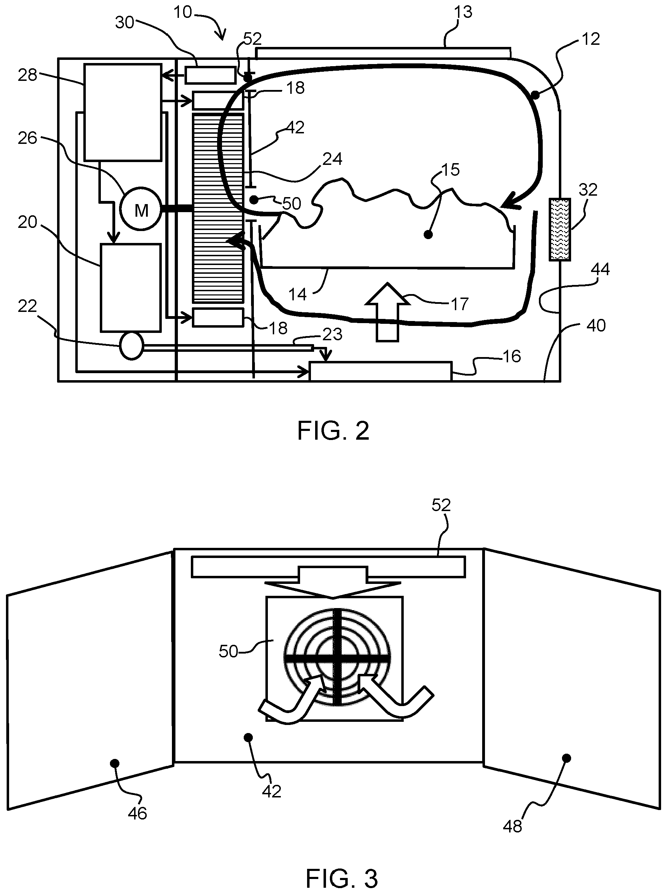

Fig. 2 provides a cross-sectional view of a cooking apparatus 10. The cooking apparatus 10 comprises a food chamber 12. The cooking apparatus 10 also includes a moveable cover 13, e.g. a door or a lid, which can be moved in order to gain access to the food chamber 12.

The cover 13 may, for example, be at least partly transparent such as to enable the user to view the interior of the food chamber 12 therethrough. This may enable the user is to visually monitor the progress of the cooking process taking place within the food chamber 12.

The cover 13 can comprise or be formed of any suitable transparent material, for example glass, in order to permit the user to view the interior of the food chamber 12 therethough.

The term "at least partly transparent" should be understood as encompassing, for example, the whole cover 13 being entirely transparent, or just a portion of the cover 13 being transparent, e.g. if the cover 13 has a transparent window and a significant non-transparent frame.

In the non-limiting example shown in Fig. 2, a food basket 14 is mounted in the food chamber 12. Food 15 to be cooked is placed in the food basket 14 which then places the food near the center of the food chamber 12. The food basket 14 has air permeable side walls and optionally an air permeable base so that air and steam can circulate through the basket 14 to the food 15.

The cooking apparatus 10 comprises a heating arrangement 16, 18 for heating at least part of the cooking apparatus 10.

In the non-limiting example shown in Fig. 2, the heating arrangement 16, 18 comprises a first heater 16 and a second heater 18. The first heater 16 is used to generate steam, represented by arrow 17, from water which is delivered from a water reservoir 20 by a dosing system 22. The dosing system 22 provides water to a feed arrangement 23 which delivers water to a surface of the first heater 16 to generate steam. Thus, the cooking apparatus 10 shown in Fig. 2 can be regarded as an example of a steam cooker.

Whilst not visible in Fig. 2, the surface of the first heater 16 may be cup-shaped; the sides of the cup-shaped surface assisting, for example, to retain water on the surface for generating steam. Thus, this surface may be alternatively described as a steam generation cup.

The dosing system 22 may deliver a constant flow of water during cooking or a regularly pulsed delivery of water, so as not to require feedback control, but it could also be controlled dynamically during cooking using feedback from, for instance, a humidity sensor (not visible).

In other examples, the cooking apparatus 10 does not include such a water reservoir, dosing system, feed arrangement, and first heater 16, such that the cooking apparatus 10 can be regarded as a fan-assisted oven. In such examples, the heating arrangement 16, 18 can still comprise, or be defined by, the second heater 18 for heating the circulating air.

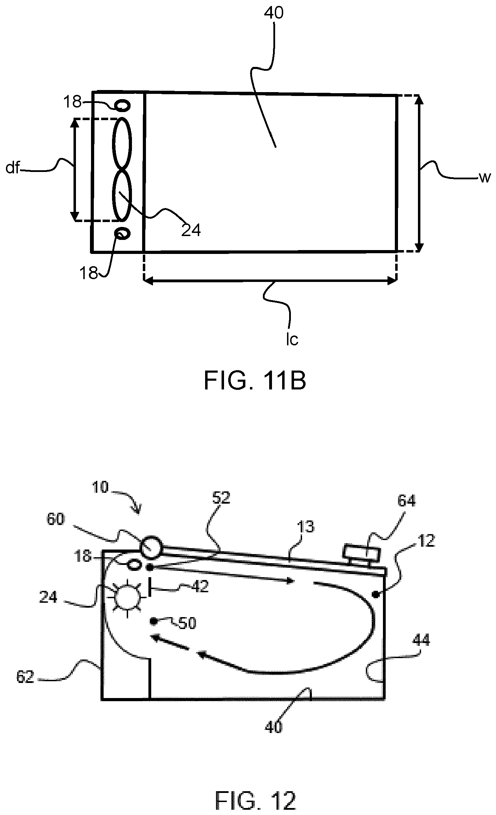

The cooking apparatus 10 comprises a circulation system 24, 26. The circulation system 24, 26 in the example shown in Fig. 2 comprises a fan 24 and motor 26. Any suitable fan 24, for example impeller, can be employed in the circulation system 24, 26. In Fig. 12, a further example of the fan 24 is illustrated. The fan 24 could be tangential fan as shown in Fig. 12. Of course, the fan 24 could be radial fan. The fan 24 could be radial fan, tangential fan, impeller, etc.

The second heater 18 may, for example, comprise a heating element which extends at least partly around the circumference of the fan 24. Air is thus blown by the fan 24 towards the heating element, and the thus heated air is returned to the food chamber 12. In the particular example shown in Fig. 2, the circulation system 24, 26 circulates the steam generated by the first heater 16 around the food chamber 12. The second heater 18 is along the circulation path and thereby further heats the steam to create a high temperature dry steam environment. The circulation system 24, 26 thus moves the saturated air inside the food chamber 12 to the food to increase convection. This also assists in producing a homogeneous temperature field in all parts inside the food chamber 12, including proximal to the cover 13. The latter is particularly advantageous when the cover 13 is at least partly transparent because fogging of the transparent part(s) of the cover 13 can be minimized or avoided.

The air, e.g. air-steam mixture, may flow through the basket 14 and also through a channel over the first heater 16 at the bottom of the food chamber 12, as shown in Fig. 2.

The present disclosure concerns, in particular, the configuration of the circulation system 24, 26, and this will be described in more detail herein below. Returning to the non-limiting example shown in Fig. 2, the cooking apparatus 10 includes a controller 28, which controller 28 controls the heating arrangement 16, 18, and optionally also the dosing system 22.

The controller 28 may, for example, receive temperature information from a temperature sensor 30. The temperature of interest is the temperature at the center of the food chamber 12, where the food is located. However, the temperature sensor 30, which may be a negative temperature coefficient (NTC) temperature sensor 30, may be located anywhere in the food chamber 12, with a known correlation between the temperature at the temperature sensor 30 location and the temperature at the center of the food chamber 12.

The temperature is, for example, regulated by switching on and off the second heater 18 of the heating arrangement 16, 18 by the controller 28.

The temperature of the first heater 16, when such a first heater 16 is included in the cooking apparatus 10 for steam generation, may be regulated by a thermostat by cycling on and off. The control mechanisms controlling the second heater 18 and the first heater 16, when present, may be independent of each other.

The controller 28 may, for example, control the heating arrangement 16, 18 to heat water from the water reservoir 20 to create steam using the first heater 16. In a non-limiting example, the second heater 18 is controlled to further heat the steam, for example to 120°C, or in the range 110 to 120°C.

The food chamber 12 is preferably vented to the ambient surroundings via one or more vents 32. Thus, the food chamber 12 remains at substantially atmospheric pressure during use.

The circulation system 24, 26 circulates the heated air, which in some examples includes steam, around the food chamber 12. The vent or vents 32 maintain the pressure at ambient pressure, and thus steam can escape when the maximum possible absolute humidity is reached (for the particular operating temperature), which would otherwise result in an increase in pressure.

The release mechanism provided by the vent or vents 32 means that the steam delivery rate does not need to be controlled, and instead there can be a preset water delivery rate to the first heater 16. The controller 28 may, for example, implement a control sequence which determines particular points of time when steam generation starts and/or ends. By way of example, a time-delayed start may be used for steam generation. The cooking apparatus 10 is, for example, in a waiting mode for a certain time e.g. 2 minutes from the start or else waiting until the food chamber 12 temperature reaches 100°C. Water is then added to the first water heater 16. This pre-heating assists to minimize or avoid condensation at the cover 13, which may be particularly advantageous when the cover 13 is at least partly transparent.

The food chamber 12 comprises a base 40, a rear wall area 42, first and second opposing side wall areas and a front wall area 44. These may, together with the cover 13, define a closed food chamber 12. Such closure, e.g. sealing, of the food chamber 12 may lead to a relatively airtight cooking apparatus 10. This may assist to reduce escape of cooking vapours and odours.

The food chamber 12 may be hermetically sealed, in which case the introduction of steam into the food chamber 12 may lead to a build-up of pressure within the food chamber 12. In order to prevent steam from forcibly exiting the food chamber 12 upon a user opening the food chamber 12 exhibiting such overpressure conditions, the above-described release mechanism can fluidly connect the food chamber 12 to the atmosphere. In a non-limiting example, the release mechanism may, in addition to the vent or vents 32, comprise a pressure release valve (not visible). Such a pressure release valve may be configured to maintain the pressure within the food chamber 12 at atmospheric pressure or alternatively may be configured to control the degree of overpressure within the food chamber 12, e.g. to allow a small degree of overpressure within the food chamber 12 in order to assist the cooking process.

The pressure release valve may, for instance, be controlled by the controller 28, e.g. with the controller 28 being responsive to a pressure sensor (not visible) in the food chamber 12.

Fig. 3 shows the food chamber 12 opened up to show the rear wall area 42 and the first and second side wall areas 46, 48. The circulation system 24, 26 draws air out of the food chamber 12 through an extraction vent 50 in the rear wall area 42. This extraction vent 50 leads to the blades of the fan 24. The extraction vent 50 may have any suitable shape permitting access to the fan 24. The extraction vent 50 preferably has a circular shape, e.g. with a diameter with a comparable, such as the same, diameter as the fan diameter. The diameter of the extraction vent 50 may be, for instance, 70% to 100%, such as 80% of the fan diameter.

A delivery vent 52 is provided at a top region of the rear wall area 42 above the extraction vent 50, in other words between the extraction vent 50 and the cover 13 when the cover 13 is in place.

The delivery vent 52 can, for example, extend across at least half of the width of the rear wall area 42, preferably across more than 60%, 70% or 80% of that width. This may assist to ensure relatively homogeneous distribution of the air delivered into the food chamber 12. In some examples, the delivery vent 52 extends across up to 100% of the width of the rear wall area 42.

The width of the delivery vent may be, for example, 100 mm to 250 mm, such as 200 mm.

The delivery vent 52 may have a height of 5 to 20 mm, preferably 12 mm.

The delivery vent 52 preferably also extends across at least half of the width of the cover 13, which may assist to minimize or avoid condensation thereon, as previously described. The delivery vent 52 may extend across a width corresponding to (or slightly larger than) a full width of the cover 13 (e.g. the transparent part of the cover 13 across which a flow is created), but there may be some expansion of the width of the airflow from the delivery vent 52. This may mean that the delivery vent 52 does not need to extend across the full cover width to achieve flow across the full underside of the cover 13.

In the non-limiting example shown in Fig. 3, the delivery vent 52 comprises, or takes the form of, a continuous slot extending widthways across the rear wall area 42. However, any suitable shape or design can be considered for the delivery vent 52.

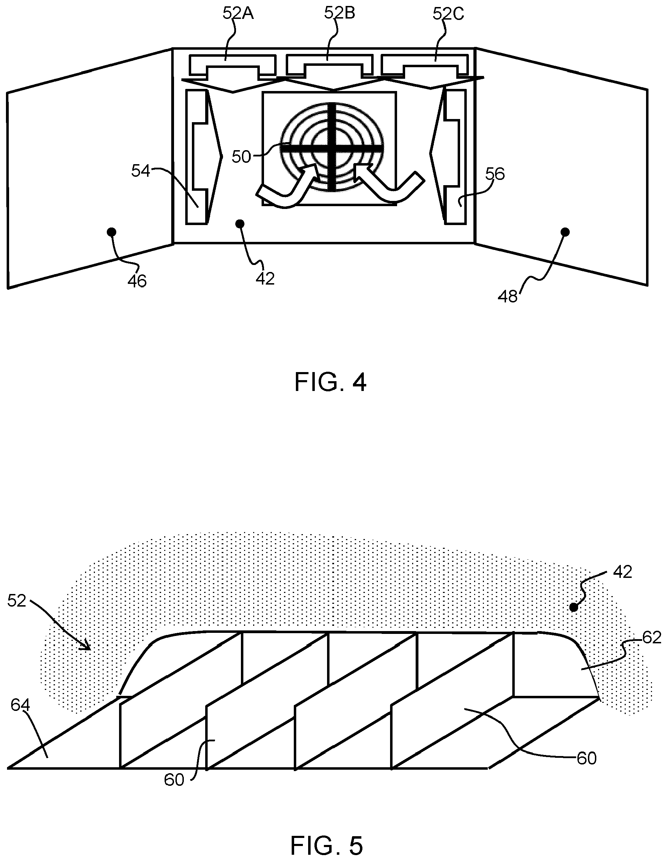

In the non-limiting example depicted in Fig. 4, the delivery vent 52 is divided into a set of slots 52A, 52B, 52C, with each of the slots 52A, 52B, 52C being positioned above the extraction vent 50, in other words between the extraction vent 50 and the opening of the food chamber 12.

In certain non-limiting examples, the slots 52A, 52B, 52C have progressively decreasing slot heights (not visible in Fig. 4) from one side of the rear wall area 42 to the other, in other words across the width of the rear wall area 42. In other non-limiting examples, the delivery vent 52 is divided into a set of circular openings (not visible). Such circular openings may, for example, have progressively decreasing diameters from one side of the rear wall area 42 to the other. Controlling the height or diameter of the slots/openings in this manner may further assist to control the airflow conditions. More generally, when the delivery vent 52 is formed as a series of slots or openings, the above-described width of the delivery vent 52 corresponds to the total air delivery width provided by the slots/openings. One or more further delivery vents 54, 56 may, in certain non-limiting examples, be provided in the rear wall area 42.

Fig. 4 shows an example in which the rear wall area 42 has the delivery vent 52 extending across its upper width between the extraction vent 50 and the opening of the food chamber 12, and also further delivery vents 54, 56 in the form of side vents extending in the top-to-bottom direction between the opening and the base 40 of the food chamber 12. Such a further delivery vent or vents 54, 56 can be used to create a desired overall flow within the food chamber 12. This may assist to achieve homogeneous cooking of food received in the food chamber 12.

Fig. 5 shows a non-limiting example of a delivery vent 52 having flow guiding fins 60. Such flow guiding fins 60 may assist to direct the airflow from the fan 24 across the opening of the food chamber 12 towards the front wall area 44, when the cover 13 is moved to expose the opening.

Such flow guiding fins 60 may additionally assist to improve the flow over the underside of the cover 13 when the cover 13 is covering the opening of the food chamber 12. Any suitable number of flow guiding fins 60 may be included in the delivery vent 52. There may, for example, be one to ten of the flow guiding fins 60.

As shown in Fig. 5, the flow guiding 60 fins may be upright, so that they provide control of the lateral flow direction. In the depicted example, the delivery vent 52 comprises a slot 62 extending widthwise across the rear wall area 42, and the flow guiding fins 60 extend from the top to the bottom of the slot 62. The flow guiding fins 60 may be in front of the slot 62, as shown, so only extend across the slot 62 at their ends, or the flow guiding fins 60 may be at least partially recessed within the slot 62.

The flow from the fan 24 may have different flow exit directions at different positions along the delivery vent 52, and in particular across the slot 62. The flow guiding fins 60 may serve to redirect the flows so that a more parallel set of flow streams is guided across the opening when the cover 13 is moved to expose the opening, or across the underside of the cover 13 when the cover 13 is in place over the opening.

As an alternative or in addition to the flow guiding fins 60, the delivery vent 52 may have a lower shelf 64.

A plane of the lower shelf 64 may be parallel or angled relative to a plane of the opening of the food chamber 12 such that the airflow is directed parallel with the opening or angled away from the opening in the direction of the front wall area 44. This may assist to minimize directing of air through the opening when the cover 13 is moved to expose the opening. By directing the flow laterally across the opening or cover 13, rather than directing the flow towards the food received in the food chamber 12, the risk of burning the food may be lessened.

In the non-limiting example shown in Fig. 5, the flow guiding fins 60 are located on the lower shelf 64. Thus, the flow guiding fins 60 assist to control lateral airflow, while the lower shelf 64 assists to control flow direction in the up-down direction.

In an embodiment, the delivery vent 52 comprises an upper shelf 66. The upper shelf 66 in this example assists to control flow direction in the up-down direction.

The upper shelf 66 may, for example, be combined with the above-described flow guiding fins 60 and/or the lower shelf 64.

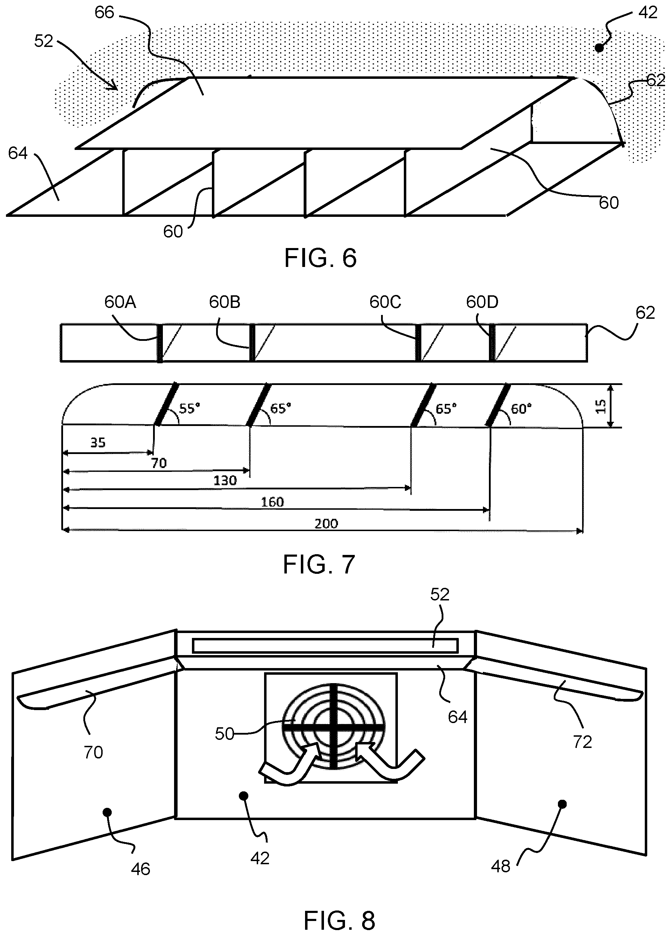

In the non-limiting example shown in Fig. 6, the flow guiding fins 60 are sandwiched between the lower shelf 64 and the upper shelf 66. The use of upper and lower shelves 64, 66 provides further control of the characteristics of the flow. In particular, there is control of the lateral flow direction as well as the flow direction in the up-down direction. The flow guiding fins 60, the lower shelf 64, and/or the upper shelf 66 can, for example, be positioned in the food chamber 12 or in the portion of the housing of the cooking apparatus 10 which accommodates the fan 24.

Fig. 7 shows a detailed example of the delivery vent 52. The delivery vent 52 has four flow guiding fins 60A to 60D. The top image in Fig. 7 shows the slot 62 from in front. The flow guiding fins 60A to 60D extend back behind the slot 62 rather than projecting forward into the food chamber 12 as in Figs. 5 and 6. However, the delivery vent 52 still has a lower shelf 64 and an upper shelf 66, but these are recessed behind the rear wall area 42.

The bottom image in Fig. 7 shows the design of the flow guiding fins 60A to 60D from above. It shows that they are directed to provide a lateral flow redirection, based on the local flow conditions created by the fan 24. Different flow guiding fins 60A to 60D are at different angles to the normal. The aim is to create a set of flow streams which extend at 90° to the rear wall area 42. Thus, the flow guiding fins 60A to 60D are adapted to straighten the flow directions from the directions created by the fan 24 towards this normal direction. The flow guiding fins 60A to 60D adapt the flow output from the fan 24 so that regions of the underside of the cover 13 which would, in the absence of the flow guiding fins 60A to 60D, not be exposed to a significant flow will be subject to a flow.

The flow guiding fins 60A to 60D may, for example, be angled at 55°, 60° and 65° to the plane of the rear wall area 42, hence at 35°, 30° and 25° to the normal, for the purpose of straightening the flow.

The depth of the flow guiding fins 60A to 60D (in the normal direction) is, in the non-limiting example shown in Fig. 7, 15 mm. In this particular case, the height of the flow guiding fins 60A to 60D is also 15 mm. The overall length of the slot is shown as 200 mm, and the flow guiding fins 60A to 60D are shown as distributed non-uniformly along the slot 62. In alternative examples, the flow guiding fins 60A to 60D may be distributed uniformly along the slot 62. The slot length can be chosen to be equal to or larger than half of width of the cover 13, e.g. the transparent part of the cover 13.

In an embodiment, a first further lower shelf 70 extends from the lower shelf 64 along the first side wall area 46, and a second further lower shelf 72 extends from the lower shelf 64 along the second side wall area 48.

Each of the lower shelves 64, 70, 72 may assist to direct the flow towards the front wall area 44 across the opening of the food chamber 12, or over the underside of the cover 13 when the cover 13 is in place over the opening.

As shown in Fig. 8, the lower shelf 64, the first further lower shelf 70, and the second further lower shelf 72 may form a continuous ridge.

Whilst not visible in Fig. 8, the delivery vent 52 can include the above-described flow guiding fins 60 and/or may be divided into a plurality, e.g. two, three, four, etc., of slots 52A, 52B, 52C.

Returning to the example shown in Figs. 2 and 3, the extraction vent 50 and the delivery vent 52 may be the only exit and entry points for air, e.g. air-steam mixtures, driven by the circulation system 24, 26. Thus, it is possible through design of the vents 50, 52 and the circulation system 24, 26, including the design of the fan 24 and the speed at which it is rotated by the motor 26, to control the circulation of air within the food chamber 12 in a reliable and repeatable way.

Note that the term side wall "area" is used because the shape (from above) may not be a polygon, but instead may be a more curved shaped thus not having precisely defined sides, front and back. However, the shape (from above) is generally square or rectangular, so that corresponding front, back and sides may be readily identified. However, this does not imply that other shapes are not possible. Even a circle may be considered to have sides, a front and back by dividing it into quadrants.

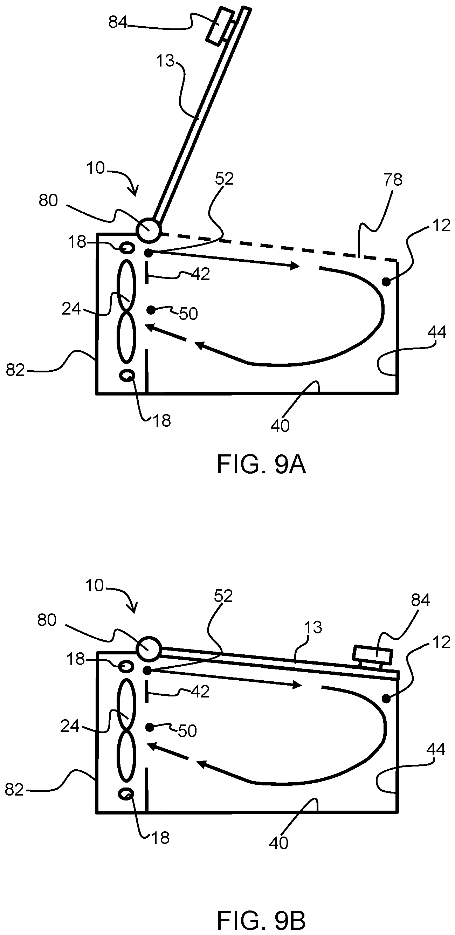

Fig. 9A shows the exemplary cooking apparatus 10 depicted in Fig. 2 with arrows showing the circulating airflow while the cover 13 of the cooking apparatus 10 is open.

More generally, the rear wall area 42, first and second side wall areas 46, 48, and the front wall area 44 extend around an opening 78 of the food chamber 12. The opening 78 opposes the base 40, as shown in Fig. 9A.

The cover 13, e.g. lid or door, is moveable to expose and close the opening 78. In the non-limiting example shown in Fig. 9A, the cover 13 is in the form of a lid arranged to be lifted to expose the opening 78 when the cooking apparatus is orientated for use, in other words when the base 40 defines the bottom of the food chamber 12.

In such an example, the cover 13 is lifted to expose the opening 78, food can be placed on the base 40 of the food chamber 12, or else placed in the above-described basket 14, and the cover 13 replaced to cover the opening 78 again. The cover 13 can be lifted to expose the opening 78 following completion of the cooking process, and the cooked food lifted out of the food chamber 12.

The cover 13, e.g. lid, may be pivotally mounted via a hinge arrangement 80. In other words, the hinge arrangement 80 pivotally mounts the cover 13, e.g. lid, on a housing 82.

Such a housing 82 can define a casing in which various components of the cooking apparatus 10, such as the circulation system 24, 26, the heating arrangement 16, 18, and the food chamber 12, are contained.

In the example shown in Fig. 9A, the hinge arrangement 80 is arranged proximal to the rear wall area 42 such that lifting of the lid 13 initially exposes a portion of the opening 78 proximal to the front wall area 44. This design can facilitate access to the food chamber 12, e.g. for observing the cooking process.

The cooking apparatus 10 can be arranged on a kitchen countertop such that the front wall area 44 is proximal to the user. Since the circulation system 24, 26 is arranged proximal to the rear wall area 42 and distal to the front wall area 44 in this example, the part of the cooking apparatus 10 containing the circulation system 24, 26 does not impede access to the food chamber 12, e.g. by lifting the cover 13.

The cover 13 can comprise a handle or knob 84 to assist the user in opening, e.g. lifting, the cover 13, as shown in Fig. 9A.

Whilst the cover 13 is moveable via the hinge arrangement 80 in the non-limiting example shown in Fig. 9A, any suitable movement of the cover 13 in order to expose the opening 78 can be considered, such as lifting the cover 13 off, in other words separating the cover 13 from the housing 82, in order to gain access to the food chamber 12.

More generally, when the user moves the cover 13, e.g. by lifting the lid 13, the configuration of the air circulation system 24, 26 and the delivery vent 52 nevertheless means that air is directed across the at least partially exposed opening 78 in the direction of the front wall area 44. Directing the airflow across, rather than through, the at least partially exposed opening 78 assists to minimize or prevent the user receiving a heat blast, for example towards their face, at the moment of moving the cover 13 to expose the opening.

This airflow while the cover 13 is exposed is represented by the arrows in Fig. 9A. The airflow directed from the delivery vent 52 may be regarded as a concentrated jet extending across, e.g. parallel to, the opening 78. Similarly, the jet can extend across, e.g. parallel to, the cover 13 when the cover 13 is covering the food chamber 12, as will be described in more detail with reference to Fig. 9B.

The circulation system 24, 26 is configured to provide a first, higher, pressure at the delivery vent 52 and a second, lower, pressure at the extraction vent 50. The difference between the first and second pressures, in combination with the arrangement of the delivery vent 52 to direct the airflow in the direction of the front wall area 44, causes the airflow to be directed across, rather than through, the at least partially exposed opening 78.

When the opening 78 is fully exposed, the airflow may, for instance, follow a shortcut, e.g. a more circular path, within the food chamber 12 between the delivery vent 52 and the extraction vent 50. In this case, air is also not directed through the opening 78.

The pressure difference assisting to direct air from the delivery vent 52 across the at least partially exposed opening 78 can be achieved by, for instance, selecting a rotational speed of the motor 26 which is employed both when the cover 13 closes the opening 78 and when the cover 13 is moved to at least partially expose the opening 78.

In such an example, the rotational speed can be selected, in other words predetermined, based on geometry- and power-related considerations, as will be explained in more detail herein below.

Alternatively, the rotational speed may be adaptively controlled to maintain the pressure difference which causes directing of the air delivered though the delivery vent 52 across the at least partially exposed opening 78. For example, a controller, e.g. the controller 28, may control the rotational speed of the fan 24 based on feedback from one or more sensors (not visible).

One or more pressure sensors may, for instance, be arranged to sense the pressure difference, and the controller, e.g. the controller 28, may be adapted to maintain the pressure difference, e.g. upon the cover 13 being moved to expose the opening 78, based on the sensory input from the one or more pressure sensors. The one or more pressure sensors may, for example, include a first pressure sensor at the delivery vent 52, and a second pressure sensor at the extraction vent 50. In this case, the pressure difference may be determined from the respective pressures sensed by the first and second pressure sensors.

Alternatively or additionally, the one or more sensors can include a sensor configured to sense movement, or a degree of movement, of the cover 13 to expose the opening 78, and in this case the controller, e.g. the controller 28, may be configured to control the rotational speed based on the sensed movement or degree of movement.

Directing the delivered airflow across the opening 78 may be regarded as provision of an air curtain thereacross. The air curtain provided by the circulation system 24, 26 assists to retain heat within the food chamber 12 when the cover 13 is at least partially opened during the cooking process, for example in order to monitor the cooking process. The extension of the air curtain across the at least partially exposed opening 78 further assists to minimize or prevent the user receiving a heat blast, for example towards their face, at the moment of moving the cover 13 to expose the opening 78.

Fig. 9B shows the exemplary cooking apparatus 10 depicted in Fig. 2 with arrows showing the circulating airflow while the cover 13 of the cooking apparatus 10 is closed. Since the delivery vent 52 is arranged above the extraction vent 50, in other words between the extraction vent 50 and the cover 13 when the opening 78 is closed by the cover 13, the delivery vent 52 enables a flow of the delivered air to pass over the underside of the cover 13.

When the cover 13 is at least partly transparent, the transparency can result in increased heat losses compared to an insulated wall. Exposing the underside of the cover 13, and in particular transparent part(s), to the flow created by the circulation system 24, 26 may assist to maintain such transparent part(s) above the dew point, thereby reducing fogging.

More generally, the cooking apparatus 10 may have a top loader design in which the base 40 defines the bottom of the food chamber 12 when the cooking apparatus 10 is orientated for use. This may facilitate user interaction with food received in the food chamber 12. In particular, such a top loader design may facilitate adding ingredients to the food chamber 12, stirring food in the food chamber 12, turning over food in the food chamber 12, cleaning of the food chamber 12, and particularly cleaning the surface of the first heater 16, e.g. steam generation cup, at the bottom of the food chamber 12, and so on.

Condensation build-up on the underside of the cover 13 can nonetheless be alleviated using the airflow, and this is particularly useful when the cover 13 is at least partly transparent, as previously described.

In an embodiment, the transparent area of the cover 13 is equal to or greater than an area of the opening 78. This facilitates visual inspection of the cooking process through the cover 13.

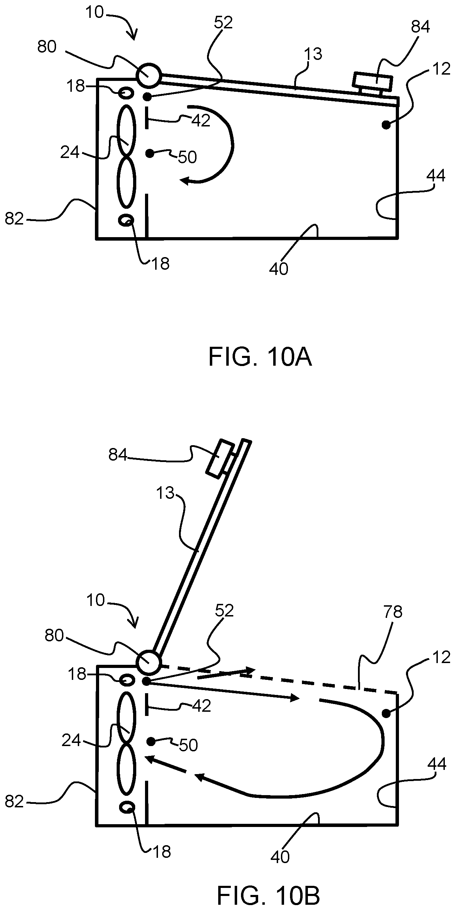

In contrast to the closed-cover 13 airflow depicted in Fig. 9B, Fig. 10A shows a cooking apparatus 10 whose circulation system 24, 26 delivers insufficient airflow while the cover 13 is closed. In the latter scenario, the airflow is too low to circulate around parts of the food chamber 12 proximal to the front wall area 44.

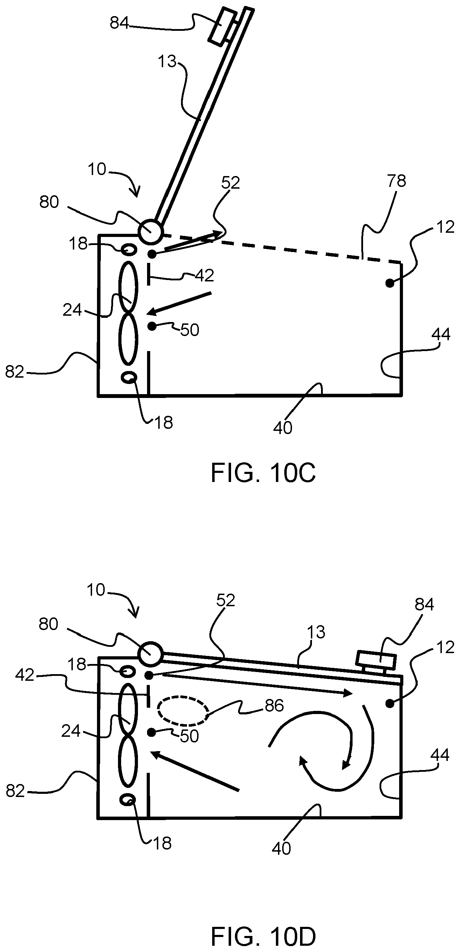

Figs. 10B and 10C show contrasting scenarios: in Fig. 10B the delivered airflow is sufficient to be largely retained within the food chamber 12 when the cover 13 is moved to expose the opening 78; but in Fig. 10C the delivered airflow is insufficient to retain the airflow within the food chamber 12. The latter scenario may be regarded as a comparative example in which the pressure difference between at the delivery vent 52 and at the extraction vent 50 is insufficient to cause the delivered airflow to be directed across the at least partially exposed opening 78, and in this case completely exposed opening 78, in the direction of the front wall area 44.

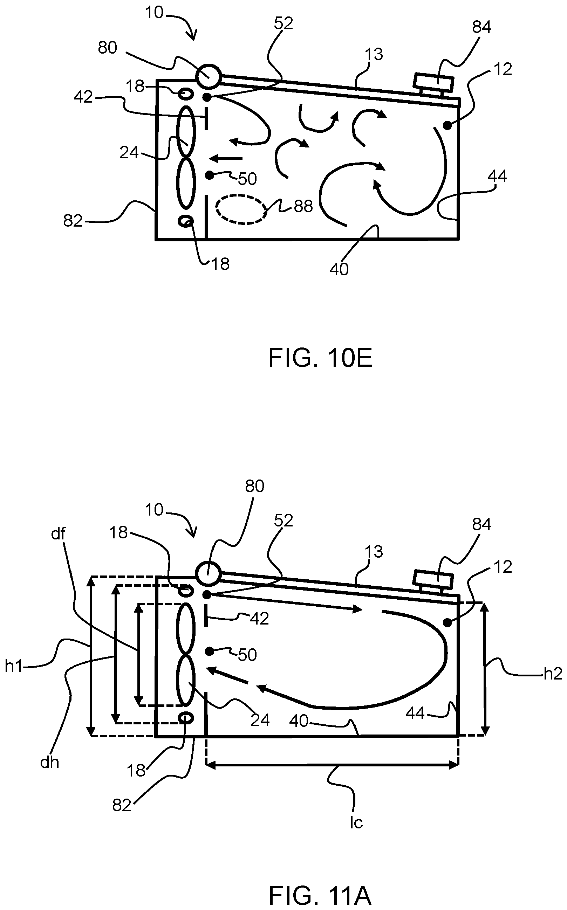

Figs. 10D and 10E schematically depict inhomogeneous distribution of the delivered air within the food chamber 12 when the cover 13 is closed. In Fig. 10D, the airflow is high enough to cause a region 86 proximal to the rear wall area 42 and the delivery vent 52 in which there is minimal airflow. In Fig. 10E, an excessive turbulent airflow causes a region 88 proximal to the rear wall area 42 and the base 40 to receive minimal airflow.

The airflow range delivered by the circulation system 24, 26 may be defined by the maximum fan diameter of the fan 24 that can be fitted into the housing 82 of the cooking apparatus 10, and the rotational speed of the motor 26 which rotates the fan 24. The flow which can be generated by the fan 24 is proportional to the square of the fan diameter. The volume flow of the circulation system 24, 26 is equal to the rotational speed of the motor 26, e.g. in revolutions per minute, multiplied by the square of the fan diameter, multiplied by the fan width.

The dimensions of the food chamber 12 may be defined by the maximum food volume/mass for a meal to be cooked therein, e.g. a meal for three people, and the area of the base 40 and/or the basket 14 in which the food is received. The food chamber 12 may be designed in such a way as to minimize the footprint of the cooking apparatus 10 on the kitchen countertop. This may involve minimizing the area of the base 40 in examples in which the base 40 defines the bottom of the cooking apparatus 10 when the cooking apparatus 10 is orientated for use.

The height of the cooking apparatus 10 is at least partly defined by the size/volume of the food required to be received in the food chamber 12, and this height itself at least partly determines the largest possible fan diameter. The heating arrangement 16, 18, and in particular the second heater 18 may also determine the cooking apparatus 10 dimensions.

The minimum airflow may also be defined by heating energy that is needed to cook food efficiently. In particular, the minimum airflow that is capable of sufficiently cooling the heating arrangement 16, 18, and the second heater 18 in particular, and taking the heat to the food received in the food chamber 12 is defined by the heating power and temperature difference between the second heater 18 surface and the cooking temperature. The heating power (in W) is then equal to the air mass flow (in kg/s) multiplied by the specific air thermal capacity (in kJ/kgK) multiplied by the temperature difference between the second heater 18 and the air.

The airflow may thus be determined by the power of the second heater 18, that tends to be the maximum that a household fuse can withstand, maximum fan diameter, and the rotational speed of the motor 26.

The airflow within the food chamber 12 may, for instance, be in the range of 2 to 30 liters/second, preferably 5 to 15 liters/second.

The volume of the food chamber 12 can be in the range of 5 to 10 liters, such as 8 liters.

The airflow may be measured at the center of the delivery vent 52 where the airflow exits the housing portion containing the fan 24 or at the extraction vent 50 where the airflow enters the housing portion.

A standard method can be used to measure the airflow using a suitable anemometer, e.g. a hot wire anemometer.

As best shown in Fig. 11A, the rear wall area 42 can have a first height h1 (which is the same as the height of the housing portion containing the fan 24 in this example), and the front wall area 44 can have a second height h2 which is shorter than the first height h1. In this manner, the opening 78, and thus the surface of the cover 13 covering the opening 78, declines from the rear wall area 42 towards the front wall area 44. The slope of the decline may be, for example, in the range of 5° to 20°, such as 10°.

When the cover 13 is at least partly transparent, the declining cover 13 can assist the user to observe food in the food chamber without being required to bend over/towards the cover 13. Moreover, the declining cover 13 in combination with the air from the delivery vent 52 being directed across the underside of the cover 13 in the direction of the front wall area 44 may assist to guide any condensation collecting on the cover 13 towards the front wall area 44.

Gravity may assist such guiding of the condensation in examples in which the cooking apparatus 10 has the above-described top loader design in which the base 40 defines the bottom of the food chamber 12 when the cooking apparatus 10 is orientated for use.

As also shown in Fig. 11A, the second heater 18 is spaced apart from an outermost periphery of the fan 24. In an embodiment, the fan 24 has a fan diameter df extending between opposing points of the outermost periphery, and the second heater 18 comprises, or is defined by, a circular heating element having a heating element diameter dh which is 30% greater, or at least 30% greater, than the fan diameter df. This assists to minimize excessive blocking of the airflow generated by the fan 24 by the circular heating element of the second heater 18 enclosing the fan 24.

Alternatively or additionally, the height h1 of the portion of the housing 82 which accommodates the fan 24 and the second heater 18 is at most 30% greater than the heating element diameter dh. This assists to ensure adequate directing of the airflow from the delivery vent 52, so that the delivered air can reach the front wall area 44.

Moreover, the height h1 may be greater than the heating element diameter dh in order to avoid that airflow is minimized by the housing 82 being too close to the fan 24 and the second heater 18. Thus, (dh x 1.3) > h1 > dh.

Partly to assist in compressing the air along its flow path and to maintain an airflow across the opening 78 when the cover 13 is removed or across the underside of the cover 13 when the cover 13 is in place, the height h2 of the food chamber 12 at the front wall area 44 end is lower than h1 and dh: h2 < h1 < dh.

More generally, the fan diameter df can be, for example, 80 to 200 mm, such as 80 to 180 mm, e.g. 90 mm or 150 mm.

In the non-limiting example depicted in Figs. 11A and 11B, the cooking apparatus 10 has the following dimensions: food chamber 12 height, h1, is 135 to 155 mm, e.g. 144 mm; food chamber 12 height, h2, is 110 to 130 mm, e.g. 120 mm; the food chamber 12 length, lc, is 280 to 300 mm, e.g. 290 mm; and the food chamber width, w, is 215 to 225 mm, e.g. 217 mm; the diameter of the extraction vent 50 is 60 to 90 mm, e.g. 70 mm, and the fan diameter df is 80 to 100 mm, e.g. 90 mm. The delivery vent 52 has a height of 5 to 20 mm, e.g. 12 mm. The width of the delivery vent 52 is from half of the width of the food chamber 12 to the full width (217 mm) of the food chamber 12, in this case 108.5 mm to 217 mm, e.g. 200 mm.

In this example, with the second heater 18, e.g. including the circular heating element, positioned around the fan 24, there may only be a space of 5 to 15 mm, e.g. 10 mm, between the heating element and the delivery vent 52. The airflow within the food chamber 12 in this example is in the range of 2 to 30 liters/second, preferably 5 to 15 liters/second. This arrangement leads to the above-described pressure difference between at the delivery vent 52 and at the extraction vent 50 such that, when the cover 13 is moved to at least partially expose the opening 78, the air is directed from the delivery vent 52 across the at least partially exposed opening 78 in the direction of the front wall area 44.

An efficient cooking ratio provided by the cooking apparatus 10 can be defined by four parameters: airflow/air-steam flow, food chamber 12 volume, food mass and electric power. An optimal ratio can be attained when the food chamber 12 has a relatively small volume, e.g. 8 to 10 liters, to heat up fast, the food mass is relatively large due to users' preference, and maximal power is drawn from the mains to maximise heating arrangement 16, 18 and circulation system 24, 26 power to heat up food as quickly as possible. A certain air/air-steam flow arrangement may bring these parameters to a common optimal function, and may also serve to maximize nutrient retention during the cooking process.

A comparison of the characteristics of an exemplary cooking apparatus 10 with conventional cooking devices is provided in Table 1.

**Table 1**

| | **Cooking Apparatus 10** | **Table Top Oven (Panasonic Cubie)** | **Built-in Oven** | **Steamer (Philips HD9190)** |
|---|---|---|---|---|
| **Food chamber volume** | 5 - 10 liters, e.g. 8 liters | 15 liters | 60 liters | 9 liters |
| **Air/Air-Steam flow rate** | 2-30 liters/second, preferably 5 - 15 liters per second | 7 liters/second | 20 liters/second | No forced air circulation; natural convection |
| **Air load time** | 0.5 to 1.6 seconds | 2.1 seconds | 3 seconds | Open system |
| **Exchange Air Ratio** | 38-120 min⁻¹ | 29 min⁻¹ | 20 min⁻¹ | Open system |
| **Heater Power** | 1400 - 2100 W, such as 1700 - 2000 W | 1500 W | 2000 W | 2000 W |
| **Energy consumption** | 0.086 kWh | - | - | 0.16 kWh |
| **Cooking time for a 700 g broccoli** | 10 minutes | 15 minutes | 20 minutes | 13.5 minutes |

The air load time in Table 1 corresponds to how much time is needed to fill the food chamber 12 with hot air/air-steam. The exchange air ratio indicates the forced air circulation with respect to how often air/air-steam is exchanged during the cooking process, and may thus serve as a metric for efficient cooking.

Whilst not included in Table 1, the time required for the food chamber 12 of the cooking apparatus 10 to reach above 100°C may, for example, be less than 2 minutes, and when including components for generating steam, in particular the first heater 16, the time required for an absolute humidity of 500 g/m³ to be exceeded in the food chamber 12 may be less than 5 minutes.

As discussed above, embodiments make use of a controller 28. The controller 28 can be implemented in numerous ways, with software and/or hardware, to perform the various functions required. A processor is one example of a controller 28 which employs one or more microprocessors that may be programmed using software (e.g., microcode) to perform the required functions. A controller 28 may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A cooking apparatus (10), comprising:
a food chamber (12) having a base (40), a rear wall area (42), first and second opposing side wall areas (46, 48) and a front wall area (44), wherein the rear wall area, first and second side wall areas, and front wall area extend around an opening (78) of the food chamber, which opening opposes the base;
a cover (13) for closing the food chamber, the cover being moveable to expose the opening;
a heating arrangement (16, 18) for heating at least part of the cooking apparatus;
a circulation system (24, 26) for circulating air in the food chamber;
an extraction vent (50) in the rear wall area through which air is drawn by the circulation system from inside the food chamber;
a delivery vent (52) at a top region of the rear wall between the extraction vent and the opening, the circulation system delivering air to the food chamber through the delivery vent,
wherein the delivery vent is arranged to direct the air being delivered to the food chamber towards the front wall area, and the circulation system is configured to control a pressure difference between at the delivery vent and at the extraction vent such that, when the cover is moved to at least partially expose the opening, the air is directed from the delivery vent across the at least partially exposed opening in the direction of the front wall area.

2. The cooking apparatus (10) as claimed in claim 1, wherein the rear wall area (42) has a first height (h1), and the front wall area (44) has a second height (h2) which is shorter than the first height such that the opening (78) declines from the rear wall area towards the front wall area.

3. The cooking apparatus (10) as claimed in claim 1 or claim 2, wherein the delivery vent (52) comprises a slot extending widthwise across the rear wall area (42).

4. The cooking apparatus (10) as claimed in any one of the preceding claims, wherein the base (40) defines the bottom of the food chamber (12) when the cooking apparatus is orientated for use, and wherein the cover (13) is in the form of a lid arranged to be lifted to expose the opening (78) when the cooking apparatus is orientated for use.

5. The cooking apparatus (10) as claimed in any one of the preceding claims, comprising a housing (82), and a hinge arrangement (80) for pivotally mounting the cover (13) on the housing.

6. The cooking apparatus (10) as claimed in claim 5, wherein the hinge arrangement (80) is arranged proximal to the rear wall area (42) such that lifting of the cover (13) initially exposes a portion of the opening (78) proximal to the front wall area (44).

7. The cooking apparatus (10) as claimed in any one of the preceding claims, wherein the cover (13) is at least partly transparent.

8. The cooking apparatus (10) as claimed in any one of the preceding claims, wherein the circulation system (24, 26) comprises a motor (26) and a fan (24), and the heating arrangement (16, 18) comprises a heater (18) adjacent the fan.

9. The cooking apparatus (10) as claimed in claim 8, wherein the heater (18) is spaced apart from an outermost periphery of the fan (24).

10. The cooking apparatus (10) as claimed in claim 8 or 9, wherein the fan (24) has a fan diameter (df) extending between opposing points of the outermost periphery, and wherein the heater (18) comprises a circular heating element having a heating element diameter (dh) which is at least 30% greater than the fan diameter.

11. The cooking apparatus (10) as claimed in any one of claims 8 to 10, wherein the fan (24) and the heater (18) are contained in a housing portion having a height (h1) which is at most 30% greater than the heating element diameter (dh), said rear wall area (42) separating the housing portion from the food chamber (12).

12. The cooking apparatus (10) as claimed in any one of the preceding claims, comprising a water reservoir (20), wherein the heating arrangement (16, 18) is arranged to heat water from the water reservoir (20) to generate steam.

13. The cooking apparatus (10) as claimed in claim 12, comprising a controller (28) adapted to control the heating arrangement (16, 18) to heat water from the water reservoir (20) to generate steam.

14. The cooking apparatus (10) as claimed in claim 12 or claim 13, further comprising a water dosing system (22) for delivering water to the heating arrangement (16, 18).

15. The cooking apparatus (10) as claimed in any one of claims 12 to 14, wherein the heating arrangement (16, 18) comprises a further heater (16) having a heated surface, and the cooking apparatus comprises a feed arrangement (23) for bringing water from the water reservoir (20) into contact with the heated surface to generate steam.
